# EUROPEAN PATENT APPLICATION

(11) **EP 3 236 108 A1**
(43) Date of publication of application: **25.10.2017**
(21) Application number: 17166730.6
(22) Date of filing: 18.04.2017
(51) Int. Cl.: F16H 55/14, F16H 1/16

(54) **WORM SPEED REDUCER AND ELECTRIC POWER STEERING SYSTEM**

(30) Priority: 21.04.2016 JP 2016085359
(71) Applicant: JTEKT CORPORATION, Osaka-shi, Osaka 542-8502 (JP)
(72) Inventor: NAGAI, Yoshitomo, Osaka-shi,, Osaka 542-8502 (JP)
(74) Representative: Winter, Brandl, Fürniss, Hübner, Röss, Kaiser, Polte - Partnerschaft mbB

(57) **Abstract**

A worm speed reducer includes a worm and a worm wheel meshed with the worm. The worm wheel has teeth with a modulus of elasticity of 6000 Pa or more. The difference obtained by subtracting the pressure angle on the pitch circle of the worm wheel from the pressure angle on the pitch circle of the worm is set in the range of 0.5° to 1°.

## Description

### BACKGROUND OF THE INVENTION

### 1. Field of the Invention

The present invention relates to a worm speed reducer and an electric power steering system.

### 2. Description of the Related Art

There has hitherto been used a resin in a speed reducer for an electric power steering system as a material of a tooth portion of a worm wheel in order to reduce a gear rattling noise or the like. In order to secure the strength of the resin, it is proposed to fiber-reinforce the resin using aramid fibers or the like (see Japanese Patent Application Publication No. 2014-141233 (JP 2014-141233 A), for example). Japanese Patent Application Publication No. 2002-139127 (JP 2002-139127 A) proposes making the pressure angle on the tooth root side and the pressure angle on the tooth tip side different from each other, the pitch circle serving as a boundary, on the tooth surfaces of a worm wheel in order to decrease wear. JP 2002-139127 A does not describe a pressure angle on the pitch circle.

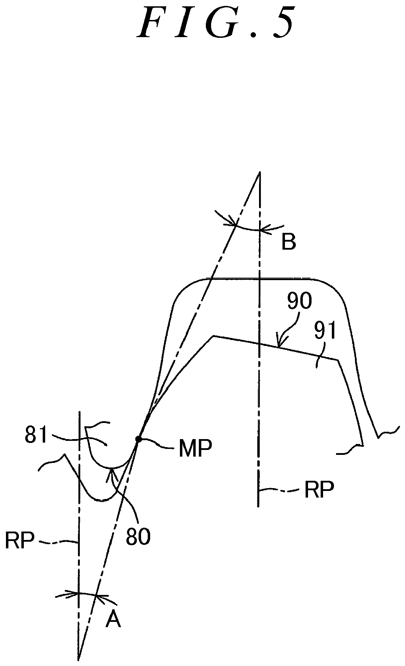

A worm and a worm wheel are crossed gears. The center of meshing between the worm and the worm wheel is disposed on an axis that is orthogonal to both the center axis of the worm and the center axis of the worm wheel. The worm wheel is meshed with the worm over about three to four teeth disposed around the center of meshing. The tooth of the worm wheel at the end of meshing contacts the worm at a position on the tooth root side with respect to the tooth at the start of meshing and teeth at the center of meshing. Therefore, as illustrated in FIG. 5 which is a schematic view, the difference between a tooth surface angle A of a worm 80 with respect to a plane RP that is orthogonal to the axis of the worm 80 and a tooth surface angle B of a worm wheel 90 with respect to the plane RP that is orthogonal to the axis of the worm 80 is large at a position of contact MP on a tooth 91 of the worm wheel 90 at the end of meshing. Therefore, the area of contact tends to be decreased, and the surface pressure tends to be increased.

In the case where a material with a low modulus of elasticity is used as the material of the teeth of the worm wheel, the tooth surfaces of the worm wheel tend to be warped through elastic deformation. Therefore, the area of contact is not decreased conspicuously at the position of contact of the tooth at the end of meshing. In recent years, there has been desired a worm speed reducer for an electric power steering system that is small in size and that provides a high output. Therefore, a material with a high modulus of elasticity tends to be used as the material of the teeth of the worm wheel.

In the case where a material with a high modulus of elasticity is used as the material of the teeth of the worm wheel, the tooth surfaces of the worm wheel are not likely to be warped through elastic deformation. Therefore, the area of contact is decreased conspicuously at the position of contact of the tooth at the end of meshing, which increases the surface pressure and increases wear. When wear is increased, backlash between the worm and the worm wheel is increased. Therefore, noise such as a gear rattling noise, which is problematic for the electric power steering system, is increased.

### SUMMARY OF THE INVENTION

An object of the present invention is to provide a worm speed reducer and an electric power steering system that contributes to suppress noise by suppressing wear of a worm wheel in the case where the teeth of the worm wheel are formed from a material with a high modulus of elasticity.

As aspect of the present invention provides a worm speed reducer including: a worm that is driven to rotate; and a worm wheel meshed with the worm, in which: the worm wheel has teeth with a modulus of elasticity of 6000 Pa or more; and a difference obtained by subtracting a pressure angle on a pitch circle of the worm wheel from a pressure angle on a pitch circle of the worm is set in a range of 0.5° to 1 °.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic view including a section of an electric power steering system to which a worm speed reducer is applied according to a first embodiment of the present invention;
FIG. 2A is an enlarged sectional view illustrating an essential portion of the worm speed reducer (with hatching representing sectional surfaces omitted);
FIG. 2B is an enlarged schematic view illustrating a part of FIG. 2A;
FIG. 3 is a graph illustrating the test results of a surface pressure measurement test for Examples 1 to 3 according to the present invention and Comparative Examples 1 and 2;
FIGS. 4A and 4B are graphs illustrating the distribution of a tooth abutment area according to Comparative Example 2 and Example 2, respectively; and
FIG. 5 is an enlarged view illustrating an essential portion of a worm speed reducer according to the related art.

### DETAILED DESCRIPTION OF EMBODIMENTS

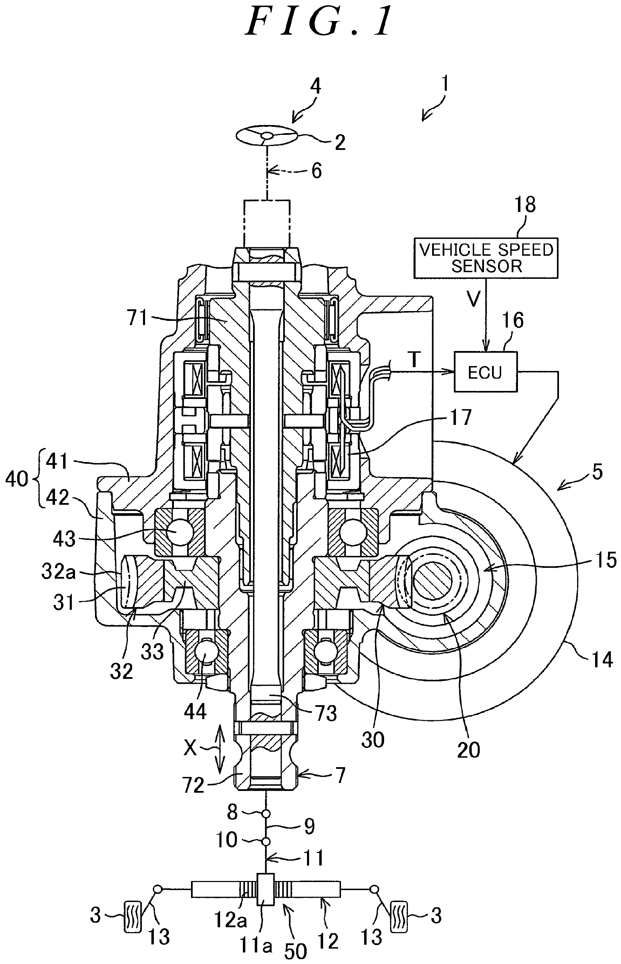

An embodiment of the present invention will be described below with reference to the drawings. FIG. 1 is a schematic view illustrating a schematic configuration of an electric power steering system 1 to which a worm speed reducer 15 is applied according to a first embodiment of the present invention. As illustrated in FIG. 1, the electric power steering system 1 includes a steering mechanism 4 and an assist mechanism 5. The steering mechanism 4 steers steered wheels 3 on the basis of an operation of a steering wheel 2 (steering member) by a driver. The assist mechanism 5 assists the driver in performing a steering operation.

The steering mechanism 4 includes a steering shaft 6 that serves as the rotational axis of the steering wheel 2. The steering shaft 6 includes a column shaft 7, an intermediate shaft 9, and a pinion shaft 11. The column shaft 7 is coupled to the center of the steering wheel 2. The intermediate shaft 9 is coupled to one end (the lower end in the axial direction) of the column shaft 7 via a universal joint 8. The pinion shaft 11 is coupled to one end (the lower end in the axial direction) of the intermediate shaft 9 via a universal joint 10.

The column shaft 7 includes an input shaft 71, an output shaft 72, and a torsion bar 73. The input shaft 71 is coupled to the steering wheel 2. The output shaft 72 is coupled to the intermediate shaft 9. The torsion bar 73 couples the input shaft 71 and the output shaft 72 coaxially with each other. A pinon 11 a is provided at the lower end of the pinion shaft 11 in the axial direction. The steering mechanism 4 includes a rack shaft 12. A rack 12a meshed with the pinon 11a is formed on the rack shaft 12. The pinon 11a and the rack 12a form a rack-and-pinion mechanism 50 that serves as a motion conversion mechanism.

When the steering shaft 6 is rotated along with a steering operation performed by the driver, rotational motion of the steering shaft 6 is converted into reciprocal linear motion of the rack shaft 12 in the axial direction via the rack-and-pinion mechanism 50. The reciprocal linear motion of the rack shaft 12 is transferred to the steered wheels 3 via tie rods 13 coupled to both ends of the rack shaft 12. Consequently, the steered angle of the steered wheels 3 is varied to change the travelling direction of the vehicle.

The assist mechanism 5 includes an electric motor 14, the worm speed reducer 15, and an electronic control unit (ECU) 16. The electric motor 14 provides assist torque to the column shaft 7. The worm speed reducer 15 transfers rotation of the electric motor 14 to the column shaft 7. The ECU 16 controls operation of the electric motor 14. When rotation of the electric motor 14 is transferred to the column shaft 7 via the worm speed reducer 15, motor torque is provided to the steering shaft 6 to assist a steering operation.

The electric power steering system 1 is provided with a torque sensor 17 that detects steering torque T on the basis of relative rotation between the input shaft 71 and the output shaft 72 of the column shaft 7. The steering torque T is torque provided to the steering shaft 6 when the driver performs a steering operation. The vehicle is provided with a vehicle speed sensor 18 that detects a vehicle speed V (travel speed of the vehicle).

The ECU 16 sets a target assist force on the basis of the detected steering torque T and the detected vehicle speed V. The ECU 16 performs feedback control of a current to be supplied to the electric motor 14 such that the assist torque provided from the electric motor 14 to the column shaft 7 is brought to the target assist torque. In the embodiment, the electric power steering system 1 is of a so-called column assist type in which the electric motor 14 provides power to the column shaft 7. However, the present invention is not limited thereto, and the present invention may be applied to an electric power steering system of a so-called pinion assist type in which the electric motor provides power to the pinion shaft.

The worm speed reducer 15 includes a worm 20 driven by the electric motor 14 to rotate and a worm wheel 30 meshed with the worm 20. The worm wheel 30 is coupled to the output shaft 72 of the column shaft 7 so as to be rotatable together with the output shaft 72 and immovable in the axial direction. A part of the column shaft 7 is housed in and supported by a housing 40 that constitutes a part of a steering column. The housing 40 includes a first housing 41 and a second housing 42 fitted to each other.

The first housing 41 functions as a sensor housing that houses the torque sensor 17. The second housing 42 functions as a gear housing that houses the worm 20 and the worm wheel 30. The output shaft 72 of the column shaft 7 is supported so as to be rotatable via a first bearing 43 held by the first housing 41 and a second bearing 44 held by the second housing 42. The first bearing 43 and the second bearing 44 are ball bearings, for example. The worm wheel 30 is disposed between the first bearing 43 and the second bearing 44 in an axial direction X of the output shaft 72.

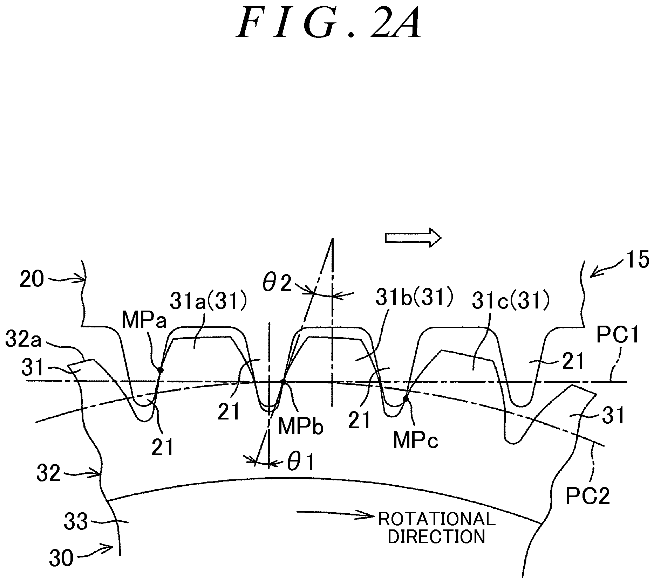

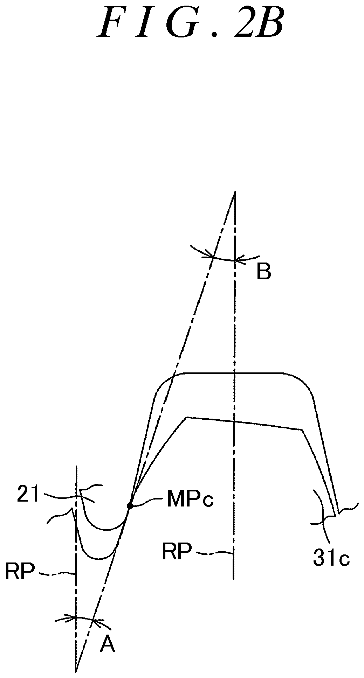

FIG. 2A is an enlarged sectional view illustrating an essential portion of the worm speed reducer 15 with hatching representing sectional surfaces omitted. FIG. 2B is an enlarged view of a part of FIG. 2A. As illustrated in FIGS. 1 and 2A, the worm wheel 30 includes an annular tooth portion 32 made of resin and having an outer periphery 32a on which teeth 31 are disposed annularly, and an annular support member 33 made of metal. The annular support member 33 is inserted into a mold when the annular tooth portion 32 is molded from resin, for example. As illustrated in FIG. 1, the outer periphery of the output shaft 72 is press-fitted into the inner periphery of the annular support member 33.

The annular tooth portion 32 of the worm wheel 30 is formed from a resin material with a modulus of elasticity of 6000 Pa or more. Thermoplastic synthetic resin materials such as nylon resins (polyamide), polyphenylene sulfide (PPS), polyether sulfone (PES), and polyacetal (POM) may be used as the resin material. The resin material which forms the annular tooth portion 32 may be fiber-reinforced using fibers such as aramid fibers, carbon fibers, and glass fibers.

As illustrated in FIG. 2A, teeth 21 of the worm 20 and the teeth 31 of the worm wheel 30 are meshed with each other over about three to four teeth. In the illustrated example, the worm 20 and the worm wheel 30 are meshed with each other over three teeth. As the worm 20 is driven to rotate so that the teeth 21 which are formed spirally are moved in a moving direction (indicated by the white arrow, e.g. rightward), the worm wheel 30 is rotated in a rotational direction (e.g. clockwise).

A tooth 31a of the worm wheel 30 at the start of meshing is meshed with a tooth 21 of the worm 20 at a meshing point MPa as the position of contact. A tooth 31b of the worm wheel 30 at the center of meshing is meshed with a tooth 21 of the worm 20 at a meshing point MPb as the position of contact. A tooth 31c of the worm wheel 30 at the end of meshing is meshed with a tooth 21 of the worm 20 at a meshing point MPc as the position of contact. A difference D (D = θ1 - θ2) obtained by subtracting a pressure angle θ2 on a pitch circle PC2 of the teeth 31 of the worm wheel 30 from a pressure angle θ1 on a pitch circle PC1 of the teeth 21 of the worm 20 is set in the range of 0.5° to 1° (0.5° ≤ D ≤ 1 °). Consequently, as illustrated in FIG. 2B, a tooth surface angle A of the worm 20 with respect to a plane RP that is orthogonal to the axis of the worm 20 and a tooth surface angle B of the worm wheel 30 with respect to the plane RP that is orthogonal to the axis of the worm 20 can be brought close to each other at the position of contact (meshing point MPc) of the tooth 31c at the end of meshing at which the surface pressure is the highest.

Therefore, it is possible to suppress an excessive decrease in area of contact at the position of contact (meshing point MPc) of the tooth 31c at the end of meshing. Thus, even in the case where the teeth 31 of the worm wheel 30 are formed from a material that is unlikely to be warped with a modulus of elasticity of 6000 MPa or more, the maximum surface pressure on the contact surface can be reduced to an acceptable value or less (e.g. 1600 MPa or less), and wear of the teeth 31 of the worm wheel 30 can be suppressed. Therefore, it is possible to provide the worm speed reducer 15 capable of suppressing noise such as a gear rattling noise with backlash suppressed and the electric power steering system 1 which includes the worm speed reducer 15.

The present invention is not limited to the embodiment described above, and may be modified in various ways without departing from the scope and spirits of the present invention.

The present invention will be described further specifically below with reference to examples and comparative examples. Examples 1 to 3 and Comparative Examples 1 and 2 with the specifications in Table 1 below were prepared. The worm speed reducer 15 according to Examples 1 to 3 and Comparative Examples 1 and 2 included the worm 20 which was made of metal and with a pressure angle θ1 on the pitch circle PC1 set as indicated in Table 1. The worm speed reducer 15 according to Examples 1 to 3 and Comparative Examples 1 and 2 included the worm wheel 30 with common specifications, in which the annular tooth portion 32 was formed from a polyamide resin reinforced with aramid fibers, the modulus of elasticity of the teeth 31 was 6000 Pa, and the pressure angle θ2 on the pitch circle PC2 was set to 14.5° as indicated in Table 1.

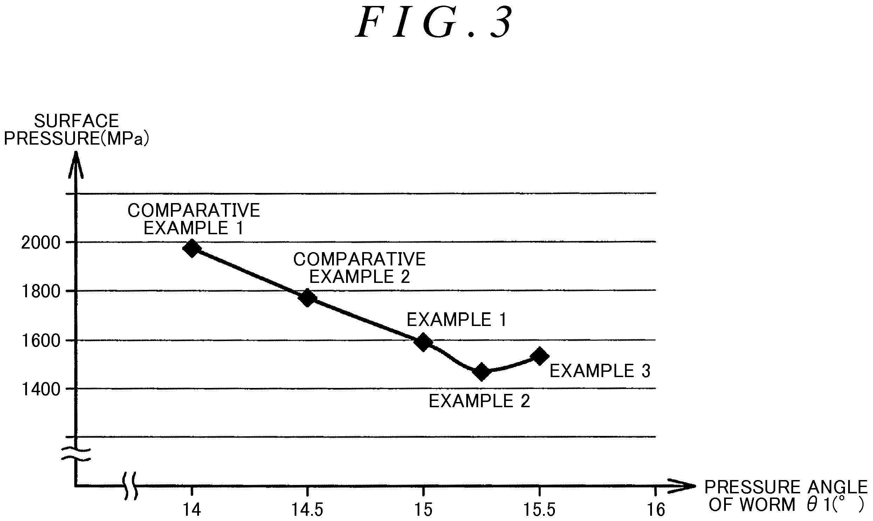

The worm speed reducer 15 according to each of the examples was subjected to a surface pressure measurement test in which predetermined torque was applied from the worm 20 and the maximum surface pressure (corresponding to the surface pressure at the position of contact of the tooth at the end of meshing) on the tooth surfaces of the worm wheel 30 was measured. The test results are indicated in Table 1 and FIG. 3. That is, when the difference D (D = θ1 - θ2) was obtained by subtracting the pressure angle θ2 on the pitch circle PC2 of the worm wheel 30 from the pressure angle θ1 on the pitch circle PC1 of the worm 20, favorable results with a surface pressure of the acceptable value 1600 MPa or less were obtained with Example 1 with a difference D of 0.5°, Example 2 with a difference D of 0.75°, and Example 3 with a difference D of 1.0°. Example 2 with a difference D of 0.75° indicated the lowest surface pressure. This demonstrates that the surface pressure was effectively reduced when the difference D was in the range of 0.5° to 1 °.

**[Table 1]**

| | θ1 | θ2 | D (θ1 - θ2) | Maximum surface pressure | Determination |
|---|---|---|---|---|---|
| Comp. Ex. 1 | 14° | 14.5° | -0.5° | 1978 MPa | × |
| Comp. Ex. 2 | 14.5° | 14.5° | 0° | 1773 MPa | × |
| Ex. 1 | 15° | 14.5° | +0.5° | 1598 MPa | ○ |
| Ex. 2 | 15.25° | 14.5° | +0.75° | 1480 MPa | ○ |
| Ex. 3 | 15.5° | 14.5° | +1.0° | 1547 MPa | ○ |

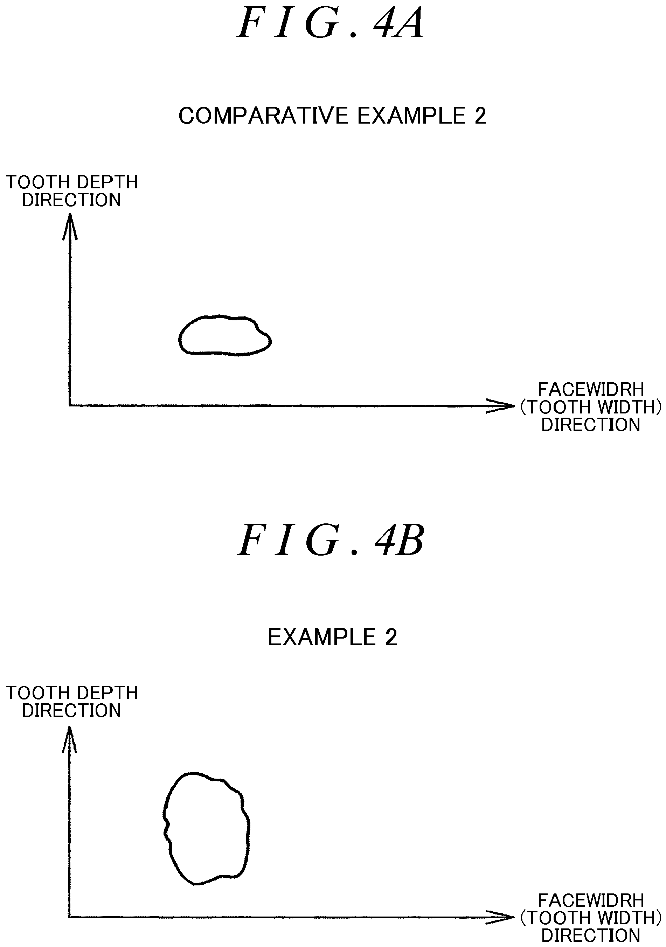

In addition, the distribution of a tooth abutment region on the tooth surfaces of the worm wheel 30 was obtained in Comparative Example 2 and Example 2. The results are indicated in FIG. 4. In FIG. 4, the horizontal axis indicates a facewidth (tooth width) direction, and the vertical axis indicates a tooth depth direction. As a result, the tooth abutment region was dispersed over a wide area in Example 2 compared to Comparative Example 2 in which the pressure angles on the pitch circles of the worm 20 and the worm wheel 30 were equal to each other. This demonstrates that the area of contact was wide in Example 2 compared to Comparative Example 2.

## Claims

1. A worm speed reducer comprising:
a worm that is driven to rotate; and
a worm wheel meshed with the worm, wherein
the worm wheel has teeth with a modulus of elasticity of 6000 Pa or more, and
a difference obtained by subtracting a pressure angle on a pitch circle of the worm wheel from a pressure angle on a pitch circle of the worm is set in a range of 0.5° to 1°.

2. An electric power steering system, wherein rotation output from an electric motor is reduced in speed and transferred to a steering shaft by the worm speed reducer according to claim 1.
